# DEMANDE DE BREVET EUROPEEN

(11) **EP 0 565 466 A1**
(43) Date de publication de la demande: **13.10.1993**
(21) Numéro de dépôt: 93420154.2
(22) Date de dépôt: 09.04.1993
(51) Int. Cl.: F16L 27/10, F01N 7/18

(54) **Elément flexible de tuyauterie, notamment pour lignes d'échappement de véhicules automobiles et son procédé de fabrication**

(30) Priorité: 10.04.1992 FR 9204676
(71) Demandeur: TUBEST, F-02130 Fere en Tardenois (FR)
(72) Inventeur: Lefavrais, Sylvain, F-02200 Soissons (FR)
(74) Mandataire: Guerre, Dominique

(57) **Abrégé**

Cet élément flexible de tuyauterie est du type constitué, essentiellement, par un segment de tube onduleux (4), logé dans un segment tubulaire de tresse externe (5), ces deux segments (4, 5) étant assemblés, l'un à l'autre, à leurs extrémités, par sertissage et/ou soudage du segment tubulaire de tresse (5) sur une partie terminale lisse (4a) du segment de tube onduleux (4), une bague d'arrêt (6) entourant l'extrémité cylindrique (5b) du segment tubulaire de tresse (5) au niveau de cet assemblage.

Le segment de tube onduleux (4) présente, à chacune de ses extrémités, au moins une onde déployée (7a), c'est-à-dire dont le pas est rendu supérieur à celui des autres ondes (7).

## Description

La présente invention concerne un élément flexible de tuyauterie, notamment pour lignes d'échappement de véhicules automobiles et son procédé de fabrication.

Lorsqu'une tuyauterie est soumise à des vibrations, comme c'est le cas des lignes d'échappement des véhicules automobiles, il est indispensable, pour la longévité de cette tuyauterie, d'intercaler, entre des éléments de tube rigide, des éléments flexibles qui, s'ils n'arrêtent pas, de manière absolue, la propagation des vibrations, présentent tout au moins l'avantage de les atténuer considérablement.

Ces éléments flexibles sont souvent constitués, essentiellement, par un segment de tube onduleux, logé dans un segment tubulaire de tresse externe, ces deux segments étant assemblés, l'un à l'autre, à leurs extrémités, par sertissage et/ou soudage du segment tubulaire de tresse sur une partie terminale lisse du segment de tube onduleux, une bague d'arrêt entourant l'extrémité du segment tubulaire de tresse au niveau de cet assemblage.

Naturellement, dans ces éléments flexibles de tuyauterie, chaque partie terminale lisse du segment de tube onduleux présente un diamètre sensiblement égal au diamètre intérieur de ce segment de sorte qu'à chacune de ses extrémités, le segment tubulaire de tresse présente un diamètre réduit grâce à une zone conique de transition dont l'extrémité correspondant à sa grande base est en appui sur le sommet de la première onde du segment de tube onduleux. Cette première onde est donc soumise à des contraintes mécaniques, nées des vibrations et de son serrage par le segment tubulaire de tresse, qui provoquent inévitablement sa rupture mécanique prématurée.

Pour y remédier, on a imaginé d'engager une rondelle de protection sur la partie terminale lisse du segment de tube onduleux avec l'inconvénient de créer une opération supplémentaire. On a aussi imaginé de prévoir un segment tubulaire de tresse de diamètre constant pourvu, à chacune de ses extrémités, d'un embout tubulaire au diamètre des extrémités libres du segment de tube onduleux et comportant, à son extrémité tournée vers les ondes du segment de tube onduleux, une collerette à assembler, à l'extrémité correspondante du segment tubulaire de tresse, par une soudure orbitale d'un prix de revient très élevé.

Le document EP-A-0 410 089 vise à remédier à tous ces inconvénients en prévoyant, à chaque extrémité du segment de tube onduleux, une ou plusieurs ondes dont les amplitudes sont progressivement croissantes, les ondes de plus faibles amplitudes présentant le double avantage de présenter une plus grande rigidité et de mieux suivre la zone conique du segment tubulaire de tresse.

Malheureusement, cette disposition nécessite un outillage spécial qui s'oppose à une fabrication en continu et renchérit considérablement le coût des éléments flexibles.

La présente invention vise à remédier à ces inconvénients.

A cet effet, dans l'élément flexible de tuyauterie qu'elle concerne et qui est du type connu précité, le segment de tube onduleux présente, à chacune de ses extrémités, au moins une onde déployée, c'est-à-dire dont le pas est rendu supérieur à celui des autres ondes.

La présence d'au moins une onde déployée permet, à la fois, de disposer d'une onde plus rigide et d'amplitude moindre que les autres.

Suivant une forme d'exécution préférée de l'invention, il est prévu plusieurs ondes déployées, à chaque extrémité du segment de tube onduleux, le déploiement de ces ondes étant dégressif en partant de chaque extrémité de ce segment de tube onduleux.

Cette disposition présente donc les mêmes avantages que les éléments flexibles précités possédant un segment de tube onduleux dont au moins la première onde de chaque extrémité est d'amplitude moindre, mais n'en présente pas les inconvénients de surcoût de fabrication.

En effet, selon le procédé de l'invention, le déploiement d'au moins une onde à chaque extrémité du segment de tube onduleux peut être obtenu par étirement ou, de préférence, par roulage ou moletage, à partir d'un segment de tube onduleux à pas constant.

Le moletage et le roulage permettent une meilleure maîtrise du déploiement des ondes que l'étirement, ce qui est intéressant lorsque plusieurs ondes doivent être déployées à chaque extrémité du segment de tube onduleux, avec une dégressivité de ce déploiement en partant de chaque extrémité de ce segment de tube onduleux.

Suivant une forme d'exécution perfectionnée de cet élément flexible, entre le segment tubulaire de tresse et la première onde déployée de chaque extrémité du segment de tube onduleux, est interposée une rondelle conique de protection de même angle au sommet que la face externe de cette première onde.

La présence de cette rondelle améliore considérablement la longévité de l'onde et, si sa mise en place crée une opération supplémentaire, sa tenue, lors de cette mise en place ne pose aucun problème en raison de sa conicité qui lui permet d'épouser parfaitement la première onde.

Suivant une variante de cette forme d'exécution perfectionnée de cet élément flexible, la rondelle conique de protection est prolongée, du côté de sa petite base, par une jupe cylindrique apte à être interposée entre la partie terminale lisse du segment de tube onduleux et celle du segment tubulaire de tresse.

Dans tous les cas, cet élément flexible peut comporter un segment de tube intérieur, constitué par un segment de tube agrafé ou de tresse ou tout autre segment tubulaire souple, lié, mécaniquement, par ses extrémités, aux extrémités du segment de tube onduleux.

De préférence, cette liaison est réalisée par points de soudure, à l'extrémité non libre de la partie terminale lisse correspondante du segment de tube onduleux.

De toute façon, l'invention sera bien comprise, à l'aide de la description qui suit, en référence au dessin schématique annexé représentant, à titres d'exemples non limitatifs, trois formes d'exécution de cet élément flexible :
Figure 1 est une vue, respectivement, en demi-coupe partielle et en demi-coupe, de l'une des extrémités de cet élément flexible ;
Figures 2 et 3 sont des demi-vues en coupe montrant deux variantes d'exécution de cet élément flexible.

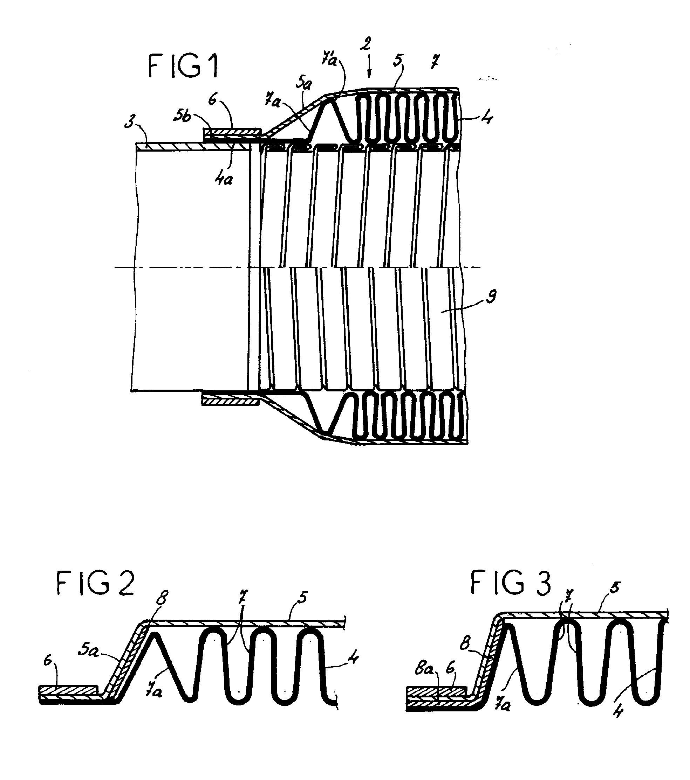

Comme le montre plus particulièrement la figure 1, cet élément flexible 2 de tuyauterie est destiné à être intercalé, entre deux éléments de tube rigide 3 d'une tuyauterie soumise à des vibrations en vue de limiter, sinon d'empêcher totalement, la transmission de ces vibrations d'un élément de tuyauterie 3 à un élément situé en aval.

Ce type d'élément flexible est particulièrement destiné aux lignes d'échappement de véhicules automobiles.

Comme les éléments flexibles de tuyauterie connus, l'élément 2 selon l'invention comprend, essentiellement, un segment de tube onduleux 4 logé dans un segment tubulaire de tresse externe 5, ces deux segments étant assemblés entre eux, par sertissage et/ou soudage de chaque extrémité du segment tubulaire de tresse 5 sur une partie terminale lisse 4a dont est pourvu le segment de tube onduleux à chacune de ses extrémités. Une bague d'arrêt 6 entoure l'extrémité du segment tubulaire de tresse 5 au niveau de cet assemblage.

Comme le montre encore la figure 1, cet élément flexible 2 est destiné à être engagé, par chacune de ses extrémités, sur un élément de tube rigide 3 appartenant à la tuyauterie à laquelle il est destiné.

Selon l'invention, le segment de tube onduleux 4 est issu d'un segment de tube onduleux présentant des ondes 7 à pas constant. La partie terminale lisse 4a, dont est pourvu le segment de tube onduleux 4 à chacune de ses extrémités, est d'un diamètre correspondant au diamètre intérieur de ce tube onduleux et, par conséquent, d'un diamètre très inférieur à celui des sommets des ondes 7. Cette disposition impose donc, au segment tubulaire de tresse 5, de présenter une zone de transition en forme de tronc de cône 5a et une partie terminale cylindrique 5b correspondant au diamètre extérieur de la partie terminale lisse 4a du segment de tube onduleux 4.

Selon l'invention et comme le montre le dessin, au moins la première onde 7a du segment de tube onduleux 4 est déployée de manière à présenter un pas supérieur à celui des autres ondes 7. Le déploiement de cette première onde 7a présente le double avantage de diminuer le diamètre de son sommet 7'a par rapport à celui des sommets des autres ondes 7 et d'augmenter sa rigidité.

Bien que cela ne soit pas représenté sur le dessin, il est possible de prévoir plusieurs ondes 7a déployées, à chaque extrémité du segment de tube onduleux 4, le déploiement de ces ondes étant dégressif en partant de la première de chaque extrémité, le choix du nombre des ondes 7 déployées dépendant des conditions d'utilisation de l'élément flexible considéré.

La présence de plusieurs ondes 7 déployées à chaque extrémité du segment de tube onduleux 4 présente l'avantage d'autoriser un ajustement de leur raideur et de répartir ainsi les sollicitations vibratoires sur plusieurs ondes en diminuant leur niveau moyen sur chacune de ces ondes.

L'élément flexible 2 selon l'invention présente donc les mêmes avantages que ceux de la technique antérieure connue dont le segment de tube onduleux présente, à chacune de ses extrémités, des ondes d'amplitude croissante mais, au contraire de ce dernier, il présente l'avantage de ne pas augmenter considérablement son coût. En effet, le segment de tube onduleux 4 nécessaire à la réalisation de cet élément flexible 2 est réalisé à partir d'un tube onduleux à pas constant et, par conséquent, d'un faible prix de revient.

Selon l'invention, le déploiement d'une ou plusieurs ondes 7 à chaque extrémité du segment de tube onduleux 4 peut être réalisé tout simplement par étirement de ce segment. Cependant, surtout lorsque plusieurs ondes 7 doivent être déployées de façon dégressive à chaque extrémité de ce segment 4, suivant un mode de mise en oeuvre préféré de l'invention, le déploiement de chacune de ces ondes 7 est réalisé par roulage ou moletage. Cette façon d'opérer permet de mieux contrôler le déploiement de chacune des ondes déployées 7a.

Les figures 2 et 3 illustrent deux formes d'exécution perfectionnée de cet élément flexible 2.

Dans la forme d'exécution illustrée par la figure 2, une rondelle conique de protection 8 est interposée entre la face externe de la première onde 7a du segment de tube onduleux 4 et la zone tronconique de transition 5a de l'extrémité correspondante du segment tubulaire de tresse 5. Naturellement, la rondelle conique de protection 8 présente le même angle au sommet que la face externe de la première onde déployée 7a du segment de tube onduleux 4.

La présence de cette rondelle conique de protection 8 nécessite, effectivement, une opération supplémentaire, lors de la fabrication de cet élément flexible 2, cependant, sa forme tronconique qui lui permet d'épouser parfaitement la face externe de la première onde 7a du segment de tube onduleux 4 facilite considérablement son maintien lors du montage de cet élément flexible 2.

On comprendra aisément que la présence de cette rondelle conique de protection 8 améliore considérablement la longévité de la première onde 7a du segment de tube onduleux 4.

La forme d'exécution illustrée sur la figure 3 diffère de celle de la figure 2 par le fait que la rondelle conique de protection 8 est prolongée, du côté de sa petite base, par une jupe cylindrique 8a dont le diamètre intérieur correspond sensiblement au diamètre extérieur de la partie terminale lisse 4a du segment de tube onduleux 4.

Comme cela est le cas pour les éléments flexibles de tuyauterie connus, celui de l'invention peut comporter, en outre, un segment de tube intérieur 9 qui peut être constitué, comme dans l'exemple illustré par la figure 1, par un segment de tube agrafé, mais qui pourrait tout aussi bien être constitué par un segment tubulaire de tresse ou par tout autre segment tubulaire souple.

Comme cela ressort, en outre, de l'examen de la figure 1, avantageusement, le segment tubulaire interne 9 est plus court que les deux autres segments tubulaires 5 et 4 de manière à ne pas pénétrer dans leur zone d'assemblage correspondant à la bague d'arrêt 6, à la partie terminale cylindrique 5b du segment tubulaire de tresse 5 et à la partie terminale lisse 4a du segment de tube onduleux 4.

Cette disposition qui ne présente aucun inconvénient présente l'avantage de réduire la longueur nécessaire de ce segment interne de tube 9.

La liaison mécanique de ce segment de tube interne 9, à chacune de ses extrémités, peut être réalisée tout simplement par quelques points de soudure assurant sa liaison à l'extrémité non libre de la partie terminale lisse 4a correspondante du segment de tube onduleux 4, ou par sertissage ou expansion de la partie terminale 4a du segment de tube onduleux 4 et/ou du tube interne 9 éventuel.

## Revendications

1. Elément flexible de tuyauterie, notamment pour lignes d'échappement de véhicules automobiles, du type constitué, essentiellement, par un segment de tube onduleux (4), logé dans un segment tubulaire de tresse externe (5), ces deux segments (4, 5) étant assemblés, l'un à l'autre, à leurs extrémités, par sertissage et/ou soudage du segment tubulaire de tresse (5) sur une partie terminale lisse (4a) du segment de tube onduleux (4), une bague d'arrêt (6) entourant l'extrémité cylindrique (5b) du segment tubulaire de tresse (5) au niveau de cet assemblage, caractérisé en ce que le segment de tube onduleux (4) présente, à chacune de ses extrémités, au moins une onde déployée (7a), c'est-à-dire dont le pas est rendu supérieur à celui des autres ondes (7).

2. Elément flexible de tuyauterie selon la revendication 1, caractérisé en ce qu'il est prévu plusieurs ondes déployées (7a), à chaque extrémité du segment de tube onduleux (4), le déploiement de ces ondes (7a) étant dégressif en partant de chaque extrémité libre de ce segment de tube onduleux (4).

3. Elément flexible de tuyauterie selon la revendication 1 ou la revendication 2, caractérisé en ce qu'entre la zone tronconique (5a) du segment tubulaire de tresse (5) et la première onde déployée (7a) de chaque extrémité du segment de tube onduleux (4), est interposée une rondelle conique de protection (8) de même angle au sommet que la face externe de cette première onde (7a).

4. Elément flexible de tuyauterie selon la revendication 3, caractérisé en ce que la rondelle conique de protection (8) est prolongée, du côté de sa petite base, par une jupe cylindrique (8a) apte à être interposée entre la partie terminale lisse (4a) du segment de tube onduleux et celle (5b) du segment tubulaire de tresse (5).

5. Elément flexible de tuyauterie selon l'une quelconque des revendications 1 à 4, caractérisé en ce qu'il comporte, en outre, un segment de tube intérieur, constitué par un segment de tube agrafé (9) ou de tresse ou tout autre serpent tubulaire souple, lié, mécaniquement, par ses extrémités, aux extrémités du segment de tube onduleux (4).

6. Procédé de fabrication du segment de tube onduleux (4) entrant dans la constitution de l'élément flexible de tuyauterie (4) selon l'une quelconque des revendications 1 à 5, caractérisé en ce que chaque onde déployée (7a) est obtenue par étirage de ce segment.

7. Procédé de fabrication du segment de tube onduleux (4) entrant dans la constitution de l'élément flexible de tuyauterie (4) selon l'une quelconque des revendications 1 à 5, caractérisé en ce que chaque onde déployée (7a) est obtenue par roulage ou moletage.

8. Procédé de fabrication du segment de tube onduleux (4) entrant dans la constitution de l'élément flexible de tuyauterie (4) selon la revendication 6 ou 7, caractérisé en ce que le tube interne (9) est fixé aux parties terminales lisses (4a) du segment de tube onduleux (4) par points de soudure.

9. Procédé de fabrication du segment de tube onduleux (4) entrant dans la constitution de l'élément flexible de tuyauterie (4) selon la revendication 6 ou 7, caractérisé en ce que le tube interne (9) est fixé aux parties terminales lisses (4a) du segment de tube onduleux (4) par sertissage ou expansion de ses extrémités.
